# EUROPEAN PATENT SPECIFICATION

(11) **EP 4 050 634 B1**
(45) Date of publication and mention of the grant of the patent: **15.11.2023**
(21) Application number: 21159336.3
(22) Date of filing: 25.02.2021
(51) Int. Cl.: H01H 33/56, H01H 33/12, H01H 31/00, H01H 33/14, H01H 33/666, H01H 33/662, H02B 13/035, H02B 13/045

(54) **SWITCHING DEVICE FOR ELECTRIC POWER DISTRIBUTION**
SCHALTVORRICHTUNG ZUR STROMVERTEILUNG
DISPOSITIF DE COMMUTATION POUR LA DISTRIBUTION D'ÉNERGIE ÉLECTRIQUE

(43) Date of publication of application: 31.08.2022
(73) Proprietor: Siemens Aktiengesellschaft, 80333 München (DE)
(72) Inventor: BAVIKAR, Kapil, 403602 Margoa (IN); CHIKHALE, Ravindra, 403602 Goa (IN); INAMDAR, Sharvari, 400708 Navi Mumbai (IN); SHINDE, Deepak, 422101 Nashik, Maharashtra (IN); SONAWANE, Mahesh, 410210 Navimumbai, Maharashtra (IN); TIVARE, Pradip, 403602 Margao, Goa (IN)
(74) Representative: Patentanwaltskanzlei WILHELM & BECK

(56) References cited:
- WO-A1-2004/032169
- JP-A- 2015 089 202
- US-A1- 2005 056 617

## Description

The present disclosure generally relates to electric power distribution, and more particularly to a switching device for opening and closing a circuit between a first electric terminal and a second electric terminal in electric power distribution.

A switching device (also commonly known as switchgear) is an apparatus used for controlling, regulating, and switching on and off the electrical circuit in electrical power distribution. The switching device is typically placed in both high and low voltage side of a power transformer, and is used for de-energizing the equipment for testing and maintenance and for clearing the fault. For instance, when the fault occurs in the electrical power distribution, heavy current flow through equipment due to which there is a risk that the equipment may get damaged, and the service may also get interrupted. Therefore, in order to protect the lines, generators, transformers and other electrical equipment from damage, automatic protective devices, such as the switchgear devices, are utilized.

The switching device needs to provide a high dielectric strength to withstand high voltages. In the case of switching device, and even other devices such as transformer (s), power line (s) (especially high-voltage electrical power transmission line (s)), busbar (s), circuit breaker, switch disconnector, earthing switch, (Switching) contactor (s), waveguides, etc., and where large electrical voltages (from about 1 kV and greater) and / or strong electric fields may occur, typically a gas or gas mixture for electrical insulation of the electrical active (i.e. exposed to electrical or a strong electric field exposed) parts is used. Gas insulation offers significantly improved dielectric strength compared to atmospheric air. In the switching device, the electrical contacts are sealed inside a tank with pressurized insulating gas.

The publication US 2005/056617 A1 describes a switching device comprising a bus-bar tank having the first electric terminal disposed therein, a circuit-breaker tank having the second electric terminal disposed therein and a bushing arranged between and coupling the bus-bar tank and the circuit-breaker tank.

A particular type of switching device is a vacuum circuit interrupter apparatus which includes separable main contacts disposed in an insulated housing. Herein, the switchgear, typically, includes a bus-bar tank, a circuit-breaker tank, a transformer tank and a cable bushing tank which together forms a single-phase pole assembly. Such similar pole assembled mounted together in adjacent layer will form the entire switchgear. The bus-bar tank consists of a three-position disconnector which is used to switch between the ON-OFF-EARTH positions respectively. The circuit-breaker tank consists of a vacuum interrupter which is used to connect and disconnect the circuit which is operated by means of spring-operated drive. The cable bushing tank is used to plug in the feeder cables for in feeding current.

Conventionally, one of the contacts is stationary relative to both the housing and to an external electrical conductor which is interconnected with the circuit to be controlled by the vacuum interrupter. The stationary contact, usually, has a pivot connection with a blade contact to be disposed in electrical connection with the external electrical conductor. The stationary contact is supported by and fixed onto a bushing in the housing. The other main contact is movable and usually comprises a cylindrical stem having the contact at one end thereof enclosed in a vacuum chamber and a driving mechanism at the other end thereof external to the vacuum chamber. Often the electrical interconnection between the circuit to be protected by the circuit interrupter and the movable contact is made on the cylindrical stem. In some examples, a flexible connector is used for connecting the movable contact to the stationary contact.

Herein, the circuit-breaker tank and bus-bar tank are two different sealed compartments with pressurized insulating gas inside thereof. The disconnector blade contact acts as a connection point between the two chambers. There is an ON contact and an Earth contact inside the bus-bar tank. The external electrical conductor (busbars) is connected to the ON contact. The blade contact has a rotary motion and it engages with either ON contact or Earth contact based on the operation. During the OFF condition there is sufficient gap to avoid the dielectric failure.

Typically, the stationary contact is fixed onto the bushing using some fixing means. Such fixing means typically uses a nut to orient the stationary contact with respect to the external electrical conductor for proper alignment of the blade contact therewith. Furthermore, the gas in the bus-bar tank needs to be separated from the other compartment which in existing designs is achieved by inserting a gasket in between the bushing and the stationary contact, and with the stationary contact being tightened by the said nut. However, such nut is exposed and can possibly create a dielectric stress point which could be cause of failure during dielectric testing. Additionally, or alternatively, the fixing means may include a fixing plate to support the gasket on a flange of the stationary contact and an insert on the bushing, in order to keep the busbar compartment gas tight. Again, the dielectric clearance from such fixing plate to the bus-bar tank is typically very small and can possibly cause failures in flashover therefrom to the tank during dielectric testing.

As discussed, in the switching device, the electrical contacts are sealed inside a tank with pressurized insulating gas. The gas most commonly used as a switchgear insulating medium is Sulfur Hexafluoride (SF6). SF6 offers very good insulating properties (dielectric strength about 2.7 times better than air) as well as very good extinguishing properties (no conductive decomposition products). In addition, SF6 encapsulated systems provide a very high level of reliability, personal protection (SF6 is chemically very stable) and lifetime (up to 30 years) and require only a very low level of maintenance. As SF6 gas has very good dielectric properties, it is possible to keep the clearance much closer within suitable dielectric rating of the switchgear. However, SF6 has a relatively high global warming potential (GWP) considered with respect to CO2. Due to its high global warming potential SF6 was included in the list of gases whose entry into the atmosphere is to be limited, according to the Kyoto Protocol of 1997. As per EU guidelines for clean air switchgear, some manufacturers have started to build a portfolio in medium voltage switchgear to shift from SF6 gas insulated switchgear to clean air solution.

As there is change in insulating medium, the dielectric properties also change accordingly. In general, such clean air insulating gases have lower dielectric strength than conventionally used SF6 based insulating gas. Therefore, as switchgears shift from SF6 insulating gas to clean air insulating gas, the risk of dielectric failure (as discussed above) is compounded. Hence, there is a need to develop new mechanism for switching device which can safely work within the limitations of dielectric strength of new type of insulating gases being employed.

One object of the present disclosure is to provide a switching device for electric power distribution which can work with clean air insulating medium, such as SF6 free gases, like mixture of carbon dioxide gas and nitrogen gas.

The object of the present disclosure is achieved by a switching device for opening and closing a circuit between a first electric terminal and a second electric terminal. The switching device comprises a bus-bar tank having the first electric terminal disposed therein and a circuit-breaker tank having the second electric terminal disposed therein. The switching device also comprises a bushing arranged between and coupling the bus-bar tank and the circuit-breaker tank. The switching device further comprises a stationary contact mounted to the bushing by a fixing arrangement. The stationary contact has a first end and a second end, with the first end disposed in the bus-bar tank and having a pivot connection with a blade contact therein to be disposed in electrical connection with the first electric terminal in the bus-bar tank. The switching device further comprises a circuit-breaker arrangement arranged inside the circuit-breaker tank and disposed in electrical connection with the second electric terminal therein. The circuit-breaker arrangement is adapted to be disposed in contact with the second end of the stationary contact. Herein, the stationary contact is at least partially accommodated inside the bushing, and the fixing arrangement is dielectrically shielded inside the bushing.

In one or more embodiments, the bushing has a flange extending into the circuit-breaker tank. The second end of the stationary contact is surrounded by the flange of the bushing 116. With the bushing, generally, having a higher dielectric strength, it helps to prevent flashovers from the second end of the stationary contact.

In a first embodiment, the fixing arrangement comprises an insert with a plurality of tapped holes formed therein, wherein the insert is arranged in a slot formed in the bushing. Herein, the insert supports the stationary contact inside the bushing.

In the first embodiment, the stationary contact has a collar with holes formed therein. The collar of the stationary contact acts as a metallic shield and helps to uniformly distribute electric field around the stationary contact.

In the first embodiment, the fixing arrangement further comprises fasteners passing through the holes in the collar of the stationary contact and the tapped holes in the insert to couple the stationary contact to the insert, thereby mounting the stationary contact to the bushing. With the fasteners being generally located inside the bushing and/or surrounded by the bushing, the risk of dielectric failure is significantly reduced.

In the first embodiment, the fixing arrangement further comprises an O-ring arranged between the insert and the collar of the stationary contact. The O-ring is pressed between the insert and the collar of the stationary contact and thus provides a pressure seal to prevent leakage of insulating gas between the bus-bar tank and the circuit-breaker tank.

In a second embodiment, the stationary contact comprises a first member having a pocket formed therein to allow for accessing a connecting hole in a bottom side thereof; and a second member having a hollow cylindrical shape with a rim extending outwardly from a top side thereof forming a cavity therein, with the rim arranged in a slot formed in the bushing, and a connecting hole formed in the top side thereof. Herein, the bottom side of the first member is accommodated in the cavity in the second member, with the connecting hole in the bottom side of the first member aligned with the connecting hole in the top side of the second member, when the first member and the second member are coupled in the stationary contact.

In the second embodiment, the second member includes a locater pin provided at the top side thereof. Further, the first member has a locating hole formed in the bottom side thereof, such that the locater pin is inserted into the locating hole to align the first member and the second member, when coupling the first member and the second member in the stationary contact.

In the second embodiment, the first member has the first end of the stationary contact with a through-hole extending therefrom up to the pocket to allow for passing a tool for fastening a fastener of the fixing arrangement, for coupling the first member and the second member in the stationary contact.

In one or more embodiments, the bushing has a substantially hollow cylindrical shape. The cylindrical shape of the bushing allows to at least partially accommodate the stationary contact and the fixing arrangement therein, and thus reduces the risk of dielectric failure therefrom.

In one or more embodiments, the bushing is made of epoxy material. The epoxy material provides a high dielectric strength to the bushing, as required to reduce the risk of dielectric failure in the switching device.

In one or more embodiments, the first end of the stationary contact has a rounded shape. The rounded shape of the first end of the stationary contact, without any sharp edges, helps to prevent flashovers therefrom.

The object of the present disclosure is further achieved by a method of assembling a switching device for opening and closing a circuit between a first electric terminal and a second electric terminal. The method comprises providing a bus-bar tank having the first electric terminal disposed therein. The method also comprises providing a circuit-breaker tank having the second electric terminal disposed therein. The method further comprises arranging a bushing between the bus-bar tank and the circuit-breaker tank to couple the bus-bar tank and the circuit-breaker tank. The method further comprises mounting a stationary contact to the bushing by a fixing arrangement, with the stationary contact being at least partially accommodated inside the bushing and the fixing arrangement being dielectrically shielded inside the bushing, the stationary contact having a first end and a second end, with the first end disposed in the bus-bar tank and having a pivot connection with a blade contact therein to be disposed in electrical connection with the first electric terminal in the bus-bar tank. The method further comprises arranging a circuit-breaker arrangement inside the circuit-breaker tank, with the circuit-breaker arrangement disposed in electrical connection with the second electric terminal in the circuit-breaker tank and adapted to be disposed in contact with the second end of the stationary contact.

In a first embodiment, the method comprises arranging an insert, as part of the fixing arrangement, with a plurality of tapped holes formed therein, in a slot formed in the bushing; providing the stationary contact with a collar with holes formed therein; arranging an O-ring, as part of the fixing arrangement, between the insert and the collar of the stationary contact; and coupling the stationary contact to the insert by fasteners, as part of the fixing arrangement, passing through the holes in the collar of the stationary contact and the tapped holes in the insert, thereby mounting the stationary contact to the bushing. Herein, the insert supports the stationary contact inside the bushing. The collar of the stationary contact acts as a metallic shield and helps to uniformly distribute electric field around the stationary contact. And, with the fasteners being generally located inside the bushing and/or surrounded by the bushing, the risk of dielectric failure is significantly reduced. The O-ring is pressed between the insert and the collar of the stationary contact and thus provides a pressure seal to prevent leakage of insulating gas between the bus-bar tank and the circuit-breaker tank.

In a second embodiment, the method comprises forming the stationary contact as a first member and a second member, with the first member having a pocket formed therein to allow for accessing a connecting hole in a bottom side thereof, and the second member having a hollow cylindrical shape with a rim extending outwardly from a top side thereof forming a cavity therein, with the rim arranged in a slot formed in the bushing, and a connecting hole formed in the top side thereof; accommodating the bottom side of the first member in the cavity in the second member, with the connecting hole in the bottom side of the first member aligned with the connecting hole in the top side of the second member, when the first member and the second member are coupled in the stationary contact; aligning the first member and the second member using a locater pin provided at the top side of the second member and a locating hole formed in the bottom side of the first member, such that the locater pin is inserted into the locating hole; and passing a tool from the first end of the first member of the stationary contact through a through-hole extending therefrom up to the pocket, for fastening a fastener of the fixing arrangement, for coupling the first member and the second member in the stationary contact.

Other aspects, features, and advantages of the present disclosure are readily apparent from the following detailed description, simply by illustrating a number of particular embodiments and implementations, including the best mode contemplated for carrying out the present disclosure. The present disclosure is also capable of other and different embodiments, and its several details can be modified in various obvious respects, all without departing from the scope of the present disclosure. Accordingly, the drawings and description are to be regarded as illustrative in nature, and not as restrictive.

A more complete appreciation of the present disclosure and many of the attendant aspects thereof will be readily obtained as the same becomes better understood by reference to the following description when considered in connection with the accompanying drawings:
- FIG 1A: is a diagrammatic perspective view representation of a switching device, in accordance with one or more embodiments of the present disclosure;
- FIG 1B: is a diagrammatic perspective view representation of a pole assembly of the switching device of FIG 1A, in accordance with one or more embodiments of the present disclosure;
- FIG 2A: is a diagrammatic partial side view representation of the pole assembly of the switching device of FIG 1A, in accordance with one or more embodiments of the present disclosure;
- FIG 2B: is a diagrammatic partial cross-sectional view representation of the pole assembly of FIG 2A taken along section AA thereof, in accordance with one or more embodiments of the present disclosure;
- FIG 3A: is a diagrammatic perspective view representation of a bushing, in accordance with a first embodiment of the present disclosure;
- FIG 3B: is a diagrammatic planar view representation of the bushing of FIG 3A, in accordance with a first embodiment of the present disclosure;
- FIG 3C: is a diagrammatic cross-sectional view representation of the bushing of FIG 3B taken along section BB thereof, in accordance with a first embodiment of the present disclosure;
- FIG 4A: is a diagrammatic top perspective view representation of a stationary contact, in accordance with a first embodiment of the present disclosure;
- FIG 4B: is a diagrammatic bottom perspective view representation of the stationary contact of FIG 4A, in accordance with a first embodiment of the present disclosure;
- FIG 5A: is a diagrammatic top perspective view representation of an insert, in accordance with a first embodiment of the present disclosure;
- FIG 5B: is a diagrammatic bottom perspective view representation of the insert of FIG 5A, in accordance with a first embodiment of the present disclosure;
- FIG 6: is a diagrammatic perspective view representation of an O-ring, in accordance with a first embodiment of the present disclosure;
- FIG 7A: is a diagrammatic perspective view representation of the bushing supporting the stationary contact therein by means of a fixing arrangement, in accordance with a first embodiment of the present disclosure;
- FIG 7B: is a diagrammatic planar view representation of the bushing supporting the stationary contact therein by means of the fixing arrangement, in accordance with a first embodiment of the present disclosure;
- FIG 7C: is a diagrammatic cross-sectional view representation of the bushing supporting the stationary contact therein by means of the fixing arrangement, taken along section CC of FIG 7B, in accordance with a first embodiment of the present disclosure;
- FIG 8A: is a diagrammatic perspective view representation of a first member of the stationary contact, in accordance with a second embodiment of the present disclosure;
- FIG 8B: is a diagrammatic perspective view representation of a second member of the stationary contact, in accordance with a second embodiment of the present disclosure;
- FIG 8C: is a diagrammatic perspective view representation of the bushing supporting the stationary contact therein, in accordance with a second embodiment of the present disclosure; and
- FIG 9: is a flowchart listing steps involved in a method of assembling a switching device, in accordance with one or more embodiments of the present disclosure.

Various embodiments are described with reference to the drawings, wherein like reference numerals are used to refer to like elements throughout. In the following description, for the purpose of explanation, numerous specific details are set forth in order to provide thorough understanding of one or more embodiments. It is apparent, however, to one skilled in the art that the embodiments of the present disclosure may be practiced without these specific details or with an equivalent arrangement. In other instances, well-known structures and devices are shown in block diagram form in order to avoid unnecessarily obscuring the embodiments of the present disclosure.

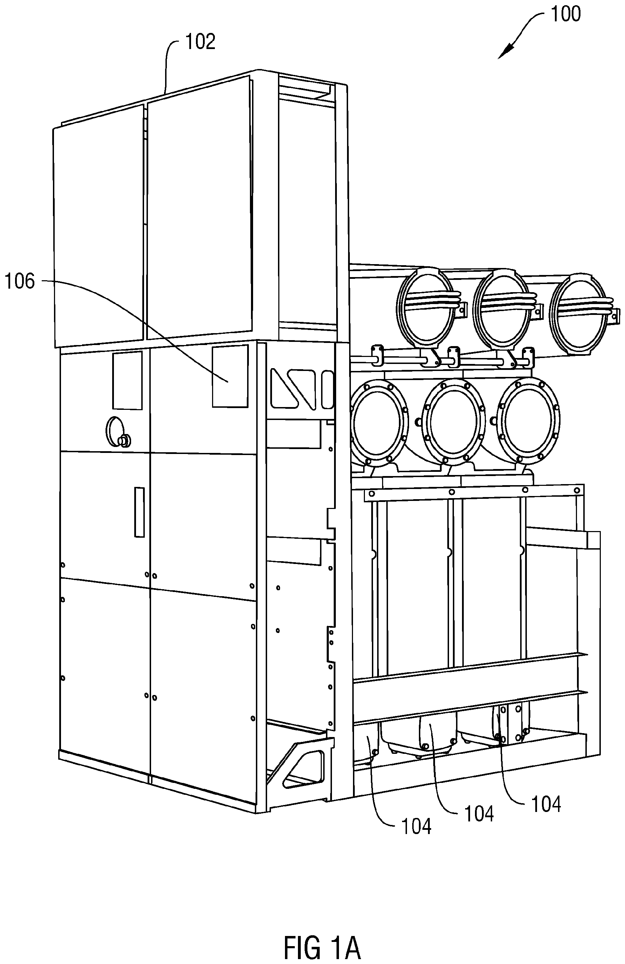

FIG 1A is a diagrammatic perspective view representation of an exemplary switching device 100, in accordance with one or more embodiments of the present disclosure. Example embodiments of a switching device 100 described herein is a vacuum interrupter based switchgear which may be included in a medium voltage switchgear unit. The present switching device 100 may be used in several different applications, for instance, for capacitor switching or for sectionalizing a line or system of switches. The switching device 100 may also be molded into a "load break" elbow connector to interrupt currents of medium voltage distribution systems. The switching device 100 may be connected to a generator or to a consumer line, in which the generator or the consumer line is disconnectable from or connectable to the energy line by means of the switching device, as per the embodiments of the present disclosure. In the present embodiments, the switching device 100 may be implemented as a gas-insulated switchgear, a vacuum interrupter or an air-break disconnector.

In the present illustration, the switching device 100 is depicted as a three-phase medium voltage switchgear, that is to say the switching device 100 has a plurality of phase conductor sections, which are used to transmit electrical power by means of a polyphase electrical power system. Herein, the switching device 100 and further modules of the switching device 100, and therefore the entire polyphase switching device 100, are designed for three phases; however, it may be contemplated that for the purposes of the present disclosure, the switching device 100 may be a single phase or any other type of switchgear as known in the art. As illustrated, the switching device 100 includes a housing 102 supporting three pole assemblies 104 therein, with each pole assembly 104 (sometimes, simply referred to as a pole 104) responsible for a single phase in the three-phase switching device 100 of the present disclosure. The switching device 100 may further include a control panel (generally represented by the numeral 106) which acts on a switching shaft (not shown) common to all the poles 104 of the switching device 100.

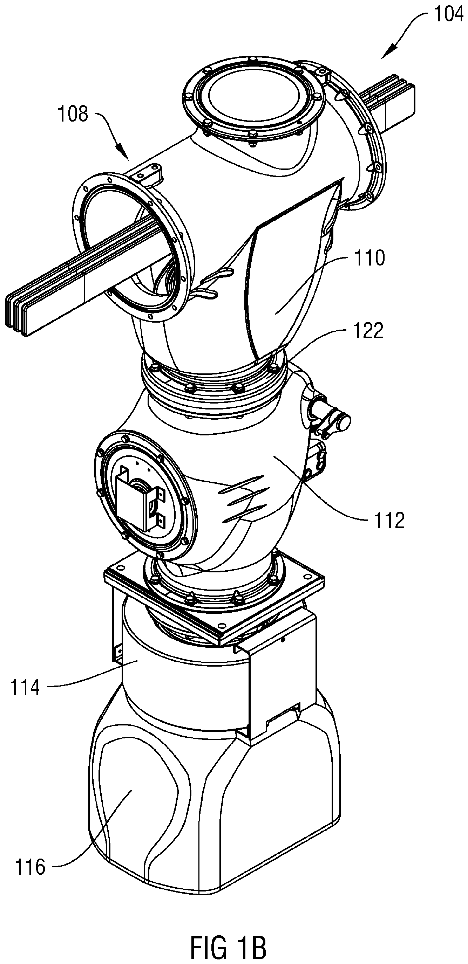

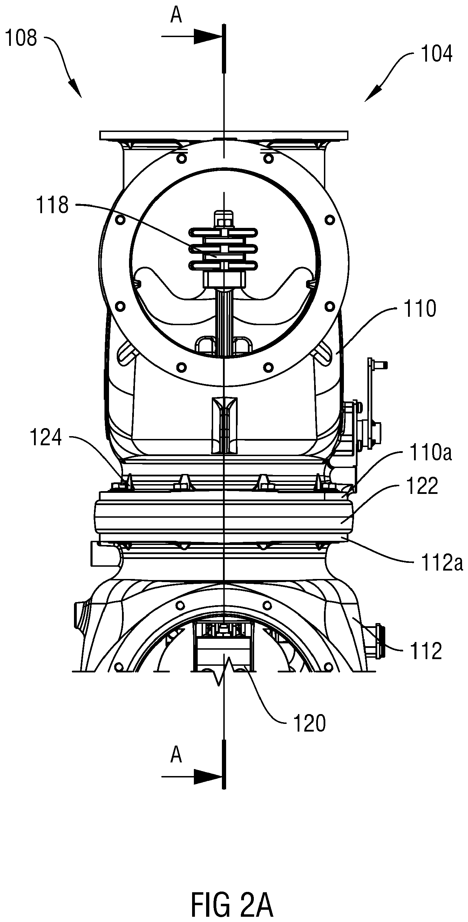

FIG 1B is a diagrammatic perspective view representation of the pole assembly 104 of the switching device 100, and FIG 2A is a diagrammatic partial side view representation of the pole assembly 104 of the switching device 100, in accordance with an embodiment of the present disclosure. As illustrated in FIGS 1B and 2A, the pole assembly 104 includes an enclosure 108. The enclosure 108 is generally hollow and may have any suitable shape based on the design and configuration of the switching device 100. Herein, the enclosure 108 is typically grounded during operation, i.e. electrically connected to earth. Advantageously, the enclosure 108 is made of a suitable electrically conductive material, e.g. aluminum, such as cast aluminum. Casting, or molding, an aluminum enclosure is a non-expensive procedure. However, the enclosure 108 can also be made of copper, zinc or any other suitable electrically conductive material. Advantageously, the enclosure 108 may be strategically plated with nickel or silver at certain locations, e.g. at electric connection areas.

In the switching device 100, the enclosure 108 is filled with an insulating gas. In the present embodiments, the insulating gas is sulfur hexafluoride (SF6) free gas. In a particular embodiment, the insulating gas is an eco-friendly insulating gas comprising a mixture of carbon dioxide gas and nitrogen gas. In one example, the insulating gas may have carbon dioxide gas and nitrogen gas in a ratio of 20:80. In another example, the insulating gas may have carbon dioxide gas and nitrogen gas in a ratio of 40:60. It may be appreciated that the given ratios are exemplary only and shall not be construed as limiting to the present disclosure in any manner. Alternatively, as a gaseous insulating medium, various insulating gases, in particular hydrofluoroolefins, perfluoroketones, perfluoronitriles, hydrofluoroxiranes, perfluoroxiranes, hydrofluoroethers, perfluoroether, or a mixture of said gases may be utilized. These are media which, at the operating temperature of the high or medium-voltage arrangements, are generally gaseous, or liquid and gaseous with a gaseous fraction having a high dielectric strength. It may be understood that in order to accommodate the insulating gas, the enclosure 108 is sealed and in turn may preferably be made of a material which is gas-impermeable, such as glass, polymers or resins.

In some examples, a filler material (not shown) may be provided in the housing 102 (as shown in FIG 1A), surrounding the enclosure 108 filled with the gaseous insulating medium, with the filler material having preferably a higher specific permittivity as compared to the enclosure 108 filled with the gaseous insulating medium. This relationship reduces dielectric requirements for the insulating gas, because the electric field is increased in areas of low electrical permittivity over areas of high dielectric permittivity. The filler material may be a liquid dielectric, a solid dielectric, but also supercritical fluids, suspensions, in particular colloids or other mixed-phase substances. A liquid fluid may in particular be an oil based on fluorinated hydrocarbons or a silicone oil. A solid fluid may be a polymer or a resin. In principle, the filler material may also be a gas which has a higher dielectric strength than the gaseous insulating medium in the hollow enclosure 108. In this case, it is not necessary that the filler material has a higher dielectric permittivity than the hollow spheres with the gaseous insulating medium.

In some implementations, an outer shape, or an outer geometry, of the enclosure 108 is smooth to distribute the electric field generated by the current through the switching device 100. The outer surface of the enclosure 108 is designed to be smooth to distribute the electric field generated by the current through the switching device 100. The outer surface of the enclosure 108 is smooth in that the enclosure 108 does not have an angular outer shape and is without roughness. That is, the outer surface of the enclosure 108 is smooth in that the outer surface has no roughness, sharp projections or sharp indentations.

Referring to FIGS 1B and 2A in combination, the enclosure 108 is generally divided, such that each pole 104 of the switching device 100 includes a bus-bar tank 110, a circuit-breaker tank 112, a transformer tank (as slightly visible and generally referred by the numeral 114 in FIG 1B) and a cable bushing tank 116 (as visible in FIG 1B). It may be appreciated that each of the bus-bar tank 110, the circuit-breaker tank 112, the transformer tank 114 and the cable bushing tank 116 forms a part or a section of the enclosure 108 of the switching device 100. Hereinafter, the various components and assemblies of the bus-bar tank 110, the circuit-breaker tank 112, the transformer tank 114 and the cable bushing tank 116 have been described generally being part of the pole assembly 102 and/or the switching device 100 without any limitations. As discussed, it may be understood that the enclosure 108, with all the sections therein, is filled with the insulating gas. That is, each of the bus-bar tank 110, the circuit-breaker tank 112, the transformer tank 114 and the cable bushing tank 116 therein, is filled with the insulating gas as described above.

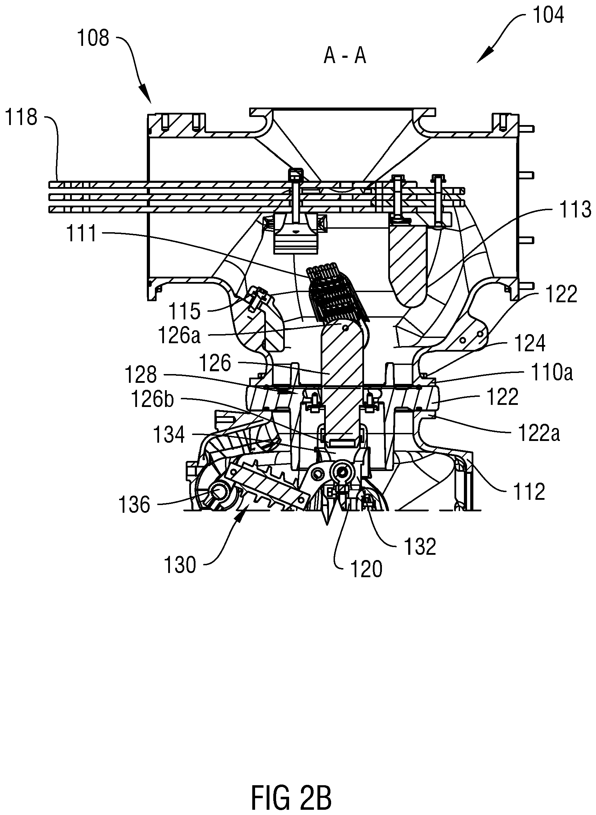

FIG 2B is a diagrammatic partial cross-sectional view representation of the pole assembly 104 taken along section AA in FIG 2A, in accordance with one or more embodiments of the present disclosure. Referring to FIGS 2A and 2B in combination, as illustrated, the pole assembly 104 includes a first electric terminal 118 and a second electric terminal 120 of the switching device 100. Typically, the first electric terminal 118 is received generally in the bus-bar tank 110; and the second electric terminal 120 is received generally in the cable bushing tank 116, extending into the circuit-breaker tank 114 (as shown). It may be appreciated that the first electric terminal 118 and the second electric terminal 120 may each include multiple electrical lines based on the design and configuration (e.g., multi-phase configuration) of the switching device 100. In some examples, the first electric terminal 118 and the second electric terminal 120 may be busbars, but can also be in the form of any other electrical conductor without any limitations. In particular, the first electric terminal 118 and the second electric terminal 120 may include a number of electrical bushings (not shown) penetrating into the respective bus-bar tank 110 and the cable bushing tank 116, one for each phase of a plural phase system. The bushings may be brazed in end covers. On the outside of the enclosure 108, the first electric terminal 118 and the second electric terminal 120 are connected to cables (not shown) which either connect the switching device 100 to a load or to a medium or high voltage power distribution line. In some examples, the first electric terminal 118 and the second electric terminal 120 may each engage a fitting (not shown) to join the power cables of the power distribution line.

In the switching device 100, generally, each of the bus-bar tank 110 and the circuit-breaker tank 112 have a substantially hollow spherical shape. As shown in FIG 2A and 2B, the bus-bar tank 110 has a connecting end 110a, and the circuit-breaker tank 112 has a connecting end 112a. Herein, the connecting end 110a of the bus-bar tank 110 and the connecting end 112a of the circuit-breaker tank 112 provide respective circular openings to allow for components from one of the sections to extend into the other section, as may be required for establishing electrical connection, for opening and closing a circuit between the first electric terminal 118 and the second electric terminal 120, in the switching device 100.

Further, as illustrated, the switching device 100 includes a bushing 122. As shown, the bushing 122 is arranged between the bus-bar tank 110 and the circuit-breaker tank 112. In the switching device 100, the bushing 122 couples the bus-bar tank 110 and the circuit-breaker tank 112. In the present embodiments, the bushing 122 has a circular periphery, complementary to the circular shape of the connecting end 110a of the bus-bar tank 110 and the connecting end 112a of the circuit-breaker tank 112. Herein, as illustrated, fasteners (generally referred by the numeral 124) are used to establish physical connection between the bushing 122, and the connecting end 110a of the bus-bar tank 110 and the connecting end 112a of the circuit-breaker tank 112, to removably assemble the bus-bar tank 110 and the circuit-breaker tank 112. In the present design configuration, the fasteners 124 may include bolts which may pass through the connecting end 110a of the bus-bar tank 110, then through the bushing 122, and subsequently through the connecting end 112a of the circuit-breaker tank 112, and then tightened using corresponding nuts. It may be appreciated that the fasteners 124 are generally located external to the enclosure 108, without any or much hindrance. This allows for relatively easy assembly and disassembly of the bus-bar tank 110 and the circuit-breaker tank 112, as may be required for maintenance and service activities of the switching device 100.

Further, as illustrated, the switching device 100 includes a stationary contact 126. In the switching device 100, the stationary contact 126 is supported by the bushing 122. In particular, the stationary contact 126 is mounted to the bushing 122 by a fixing arrangement 128, as discussed in detail below in the description. As illustrated, the stationary contact 126, generally, has the shape of a cylinder. The term "generally" is used to mean that the stationary contact 126 is substantially cylindrical but not necessarily of uninform circular cross-section (as discussed later). Other less preferred cross-sections may be employed, if desired. The stationary contact 126 has a first end 126a and a second end 126b. As may be seen, the stationary contact 126 is supported by the bushing 122 generally in a middle thereof. In the present embodiments, the stationary contact 126 is at least partially accommodated in the bushing 122. The stationary contact 126 extends both ways from the bushing 122, with the first end 126a of the stationary contact 126 disposed in the bus-bar tank 110 and the second end 126b of the stationary contact 126 disposed in the circuit-breaker tank 110.

As discussed, the stationary contact 126 extends into the bus-bar tank 110, with the first end 126a of the stationary contact 126 disposed in the bus-bar tank 110. Herein, the stationary contact 126 is adapted to be disposed in electrical connection with the first electric terminal 118 in the bus-bar tank 110. In particular, the bus-bar tank 110 includes a blade contact 111 which has a pivot connection with the first end 126a of the stationary contact 126. The blade contact 111 is rotated about the stationary contact 126 to be disposed in one of three positions, a first position in which the blade contact 111 is in contact with an ON contact 113 (which, in turn, is connected to the first electric terminal 118) to dispose the circuit in an ON state, a second position in which the blade contact 111 is in contact with an EARTH contact 115 and/or the enclosure 108 (which is grounded) to dispose the circuit in an EARTH state, and a third position in which the blade contact 111 is not in contact with any component, but insulated by the insulating gas in the bus-bar tank 110, to dispose the circuit in an OFF state. In the illustration of FIG 2B, the blade contact 111 is shown to be in the third position, disposing the circuit in the OFF state. Such configuration is known in the art and thus has not been described in further detail for the brevity of the present disclosure.

In the preset embodiments, the bushing 122 has a substantially hollow cylindrical shape. The term "substantially" is used to mean that the bushing 122 is generally cylindrical but not necessarily of uniform circular cross-section (as discussed later). Other less preferred cross-sections may be employed, if desired. Further, in an embodiment, the bushing 122 is made of epoxy material. The epoxy material provides a high dielectric strength to the bushing 122, as required to reduce the risk of dielectric failure in the switching device 100. Although the bushing 122 has been described to be made of epoxy material; in other examples, the bushing 122 may be made of any suitable material with high dielectric strength capable of preventing dielectric failure in the switching device 100. Herein, the cylindrical shape of the bushing 122 allows to at least partially accommodate the stationary contact 126 and the fixing arrangement 128 therein, and thus reduces the risk of dielectric failure therefrom.

Further, as illustrated in FIG 2B, the switching device 100 includes a circuit-breaker arrangement 130 arranged inside the circuit-breaker tank 112. The circuit-breaker arrangement 130 is disposed in electrical connection with the second electric terminal 120 in the switching device 100. This way the circuit-breaker arrangement 130 is implemented for opening and closing a circuit between the first electric terminal 118 and the second electric terminal 120 of the switching device 100. In particular, the circuit-breaker arrangement 130 is adapted to extend into the bushing 122, to be disposed in contact with the second end 126b of the stationary contact 126 therein, when the bus-bar tank 110 is assembled to the circuit-breaker tank 112, so as to close the circuit between the first electric terminal 118 and the second electric terminal 120 of the switching device 100, as described further in detail in the proceeding paragraphs.

As illustrated, the circuit-breaker arrangement 130 includes a movable contact (generally referred by numeral 132) arranged inside the circuit-breaker tank 112. Typically, as illustrated, the stationary contact 126 is generally located at a top region of the circuit-breaker tank 112, and the movable contact 132 is generally located at a bottom region of the circuit-breaker tank 112. Specifically, the stationary contact 126 may be disposed on a terminal end of the first electric terminal 118 and the moveable contact 132 may be mounted on a contact support associated with the second electric terminal 120, of the switching device 100. In one example, the stationary contact 126 and the movable contact 132 may have contact points formed from copper-impregnated tungsten. Herein, the stationary contact 126 is adapted to be disposed in electrical connection with the first electric terminal 118 and the movable contact 132 is disposed in electrical connection with the second electric terminal 120, such that when the stationary contact 126 and the movable contact 132 are in contact with each other, with the blade contact 111 in the first position thereof, the circuit between the first electric terminal 118 and the second electric terminal 120 is disposed in closed configuration, and when the stationary contact 126 and the movable contact 132 are not in contact with each other, the circuit between the first electric terminal 118 and the second electric terminal 120 is disposed in open configuration.

In one or more embodiments, the movable contact 132 may be a vacuum interrupter unit; the two terms being interchangeably used for the purposes of the present disclosure and the vacuum interrupter unit being also referred by the numeral 132 hereinafter. The vacuum interrupter unit 132 may have a generally cylindrical shape and ribbed sections on its outer surface. The term "generally cylindrical" is used to mean that a housing of the vacuum interrupter unit 132 is substantially cylindrical but not necessarily of circular cross-section. Other less preferred cross-sections may be employed, if desired. The vacuum interrupter unit 132 is aligned substantially coaxially to a central axis of the enclosure 108. As may be contemplated, the vacuum interrupter unit 132 may generally be extending in upward direction towards the stationary contact 126 disposed in the top region of the enclosure 108.

In one or more embodiments, the circuit-breaker arrangement 130 may include a rigid conductive member 134. The rigid conductive member 134 may be fixedly connected to the vacuum interrupter unit 132. Generally, the rigid conductive member 134 may have a hollow cylindrical shape. Herein, the cross-sectional shape of the rigid conductive member 134 is designed to be complementary to the shape of the vacuum interrupter unit 132, such that the rigid conductive member 134 can slidably be received onto the vacuum interrupter unit 132. In some examples, the rigid conductive member 134 may be bolted to the vacuum interrupter unit 132 by means of fasteners. For the purposes of the present disclosure, the rigid conductive member 134 is formed of copper material. Generally, the rigid conductive member 134 may be formed of any suitable conductive material with high current transfer characteristics known in the art without any limitations.

In the switching device 100, the vacuum interrupter unit 132 is adapted to move linearly inside the enclosure 108. As illustrated in FIG 2B, the circuit-breaker arrangement 130 includes an actuating arrangement 136 configured to reciprocate the vacuum interrupter unit 132 to move linearly inside the enclosure 108 to be disposed between a first position and a second position. In one or more embodiments, the actuating arrangement 136 includes a rotary to linear conversion mechanism. In some examples, the actuating arrangement 136 may include a slider-crank mechanism (as shown in FIG 2B). Herein, the actuating arrangement 136 is connected to a rotating shaft (not shown) extending from outside into the enclosure 108 to provide input rotations, to be converted into reciprocating linear movement of the vacuum interrupter unit 132 inside the enclosure 108. Such actuating arrangement 136 may be contemplated from the associated drawings by a person skilled in the art and thus has not been described in detail herein for the brevity of the present disclosure.

In the present embodiments, with the rigid conductive member 134 being fixed to the vacuum interrupter unit 132, the rigid conductive member 134 is adapted to move linearly, along with the vacuum interrupter unit 132, inside the enclosure 108. With its linear movement, the rigid conductive member 134 is adapted to engage in electrical connection with the stationary contact 126, when the movable contact 132 is in the first position, to dispose the switching device 100 in a closed circuit configuration, and when the movable contact 132 is in the second position dispose the switching device 100 in an open circuit configuration. It may be understood that the stationary contact 126 may also be cylindrical with cross-sectional diameter being slightly smaller than an inner diameter of the hollow cylindrical rigid conductive member 134, so as to allow the rigid conductive member 134 to slide thereover and being disposed in electrical connection therewith, when the movable contact 132 is in the first position to dispose the switching device 100 in the closed circuit configuration.

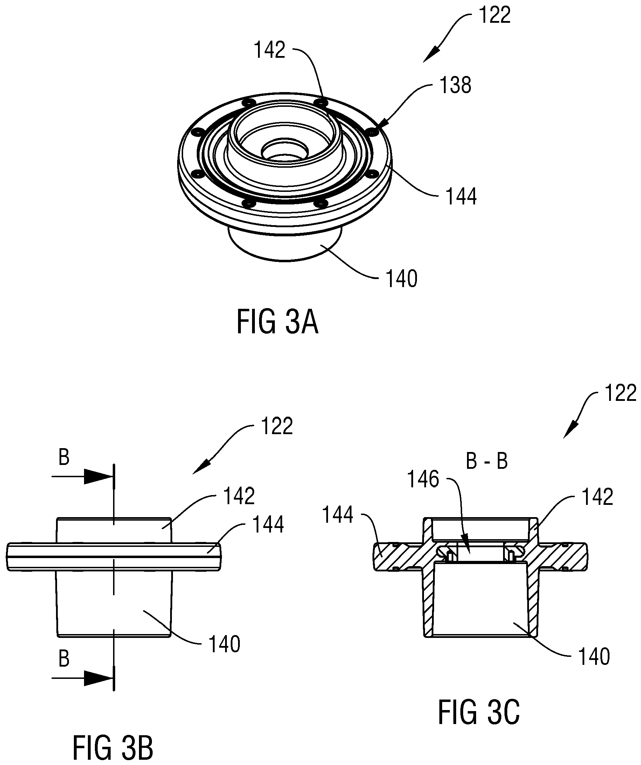

FIGS 3A-3C are diagrammatic representations of the bushing 122, in accordance with a first embodiment of the present disclosure. Referring to FIGS 3A-3C in combination, as illustrated, the bushing 122 includes holes 138 formed along periphery thereof. Such holes 138, in the bushing 122, allows for the fasteners 124 to pass therethrough to allow for coupling of the bushing 122 with the bus-bar tank 110 and the circuit-breaker tank 112. In particular, as illustrated, the bushing 122 may include a laterally projected rim 144 extending from a central disc thereof, with the holes 138 being formed in the said laterally projected rim 144. It may be understood that a diameter of the laterally projected rim 144 of the bushing 122 may generally be equal to diameters at the connecting end 110a and the connecting end 112a of the bus-bar tank 110 and the circuit-breaker tank 112, respectively, so as to allow for proper coupling of the bushing 122 with the bus-bar tank 110 and the circuit-breaker tank 112. Also, as illustrated in FIG 3C, the bushing 122 includes a slot 146 formed therein. Specifically, the said slot 146 is formed in the said central disc of the bushing 122.

Further, as illustrated in FIGS 3A-3C, the bushing 122 has a flange 140 extending into the circuit-breaker tank 112. The flange 140 is in the form of vertical/ longitudinal projection, extending downwards form the central disc of the bushing 122 into the circuit-breaker tank 112. As may be seen, the second end 126b of the stationary contact 126 is surrounded by the flange 140 of the bushing 122. In some embodiments, the bushing 122 also has a flange 142 extending into the bus-bar tank 110. The flange 142, being generally similar to the flange 140, is also in the form of vertical/ longitudinal projection, extending upwards form the central disc of the bushing 122 into the bus-bar tank 110. As may be seen, the first end 126b of the stationary contact 126 (or at least portion of the stationary contact 126 proximal to the first end 126b) is surrounded by the flange 142 of the bushing 122. It may be seen that a vertical/ longitudinal height of the flange 142 is smaller as compared to the flange 142 to allow for the blade contact 111, pivotally connected to the first end 126b of the stationary contact 126, to rotate freely. With the bushing 122, generally, having a higher dielectric strength as compared to the enclosure 108 (and even the insulating gas), the flange 140 and the flange 142 help to prevent flashovers from the second end 126b and the first end 126b, respectively, of the stationary contact 126.

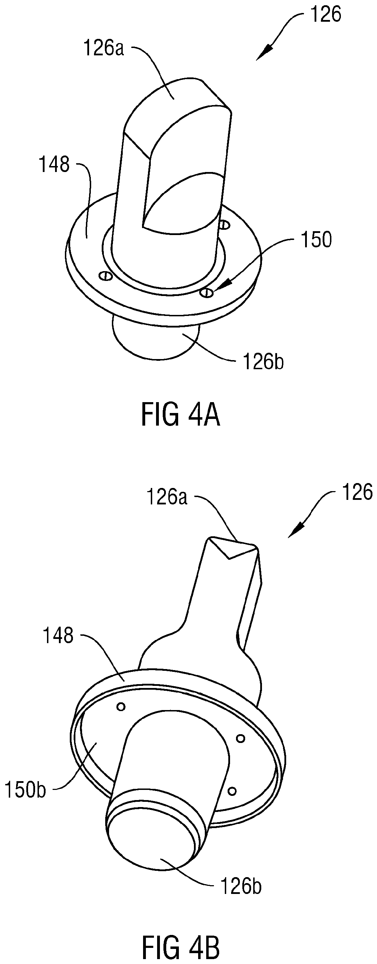

FIGS 4A-4B are diagrammatic representations of the stationary contact 126, in accordance with a first embodiment of the present disclosure. Referring to FIGS 4A-4B in combination, as illustrated, the stationary contact 126 has a collar 148 with holes 150 formed therein. The collar 148 is in the form of a lateral projection extending generally from the middle of the stationary contact 126. The said holes 150 may generally be uniformly distributed in the collar 148 of the stationary contact 126. Herein, the collar 148 of the stationary contact 126 acts as a metallic shield and helps to uniformly distribute electric field around the stationary contact 126. Further, the holes 150 in the collar 148 of the stationary contact 126 helps to mount the stationary contact 126 to the bushing 122, as discussed later in detail. Further, as illustrated in FIGS 4A-4B, the first end 126a of the stationary contact 126 has a rounded shape. Herein, the rounded shape of the first end 126a of the stationary contact 126, without any sharp edges, helps to prevent flashovers therefrom, when high currents flow through the present switching device 100 in its closed circuit configuration.

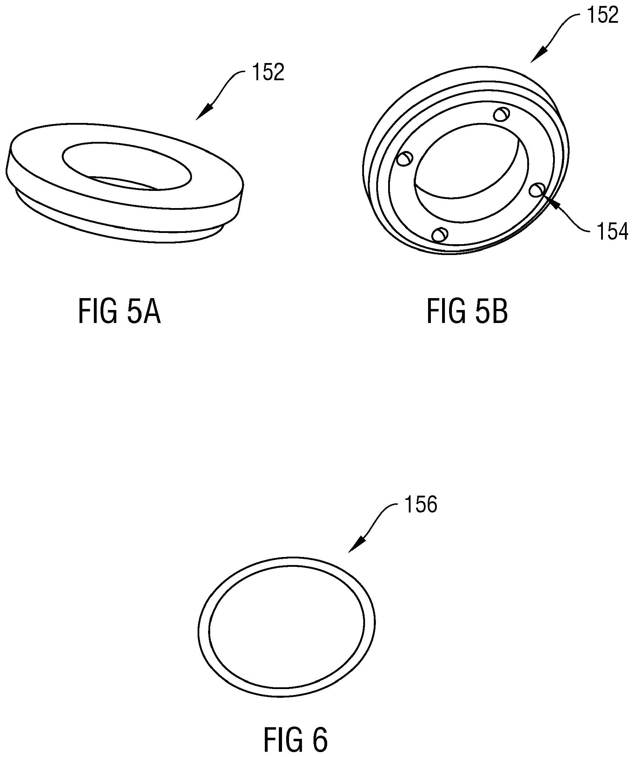

In the present switching device 100, the fixing arrangement 128 comprises an insert 152 as shown in FIGS 5A-5B. FIGS 5A-5B are diagrammatic representations of the insert 152, in accordance with a first embodiment of the present disclosure. Referring to FIGS 5A-5B in combination, as illustrated, the insert 152 has an annular (or ring) shape. As illustrated, the insert 152 has a plurality of tapped holes 154 formed therein. As may be seen, the tapped holes 154 may not extend through the thickness of the insert 152. The said tapped holes 154 may be uniformly distributed along the annular periphery of the insert 152. In the present embodiments, the insert 152 is made of any suitable metallic material. Further, the fixing arrangement 128 comprises an O-ring 156 as shown in FIG 6. FIG 6 is a diagrammatic representation of the O-ring 156, in accordance with a first embodiment of the present disclosure. The O-ring 156 acts as a pressure seal to prevent leakage of the insulating gas between the bus-bar tank 110 and the circuit-breaker tank 112. Such O-ring 156 is well known in the art and thus has not been described herein.

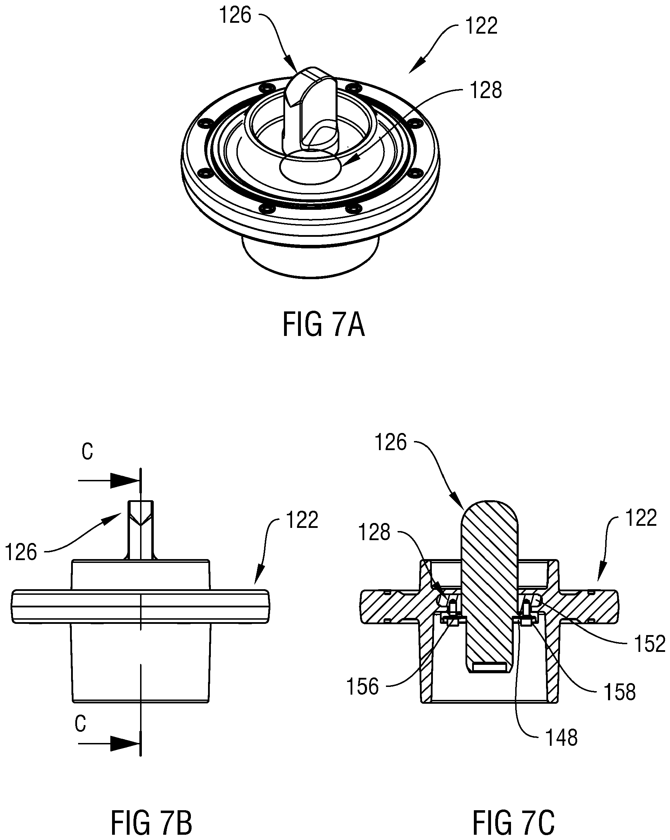

FIGS 7A-7C are diagrammatic representations of the bushing 122 supporting the stationary contact 126 therein by means of the fixing arrangement 128, in accordance with a first embodiment of the present disclosure. Referring to FIGS 7A-7C in combination, as illustrated, the fixing arrangement 128 is dielectrically shielded inside the bushing 122. In particular, the insert 152 of the fixing arrangement 128 is arranged in the slot 146 formed in the bushing 122. As illustrated, the fixing arrangement 128 further includes fasteners 158 passing through the holes 150 in the collar 148 of the stationary contact 126 and the tapped holes 154 in the insert 152 to couple the stationary contact 126 to the insert 152, and thereby mount the stationary contact 126 to the bushing 122. Herein, the insert 152 supports the stationary contact 126 inside the bushing 122. The annular shape of the insert 152 complements the shape of the bushing 122, and thus adapt the insert 152 to properly support the stationary contact 126 inside the bushing 122, in the present switching device 100. Also, herein, with the fasteners 158 being generally located inside the bushing 122 and/or surrounded by the bushing 122, the risk of dielectric failure is significantly reduced therefrom.

Also, as may be seen in FIGS 7A-7C, the O-ring 156 is arranged between the insert 152 and the collar 148 of the stationary contact 126. Herein, the O-ring 156 is pressed between the insert 152 and the collar 148 of the stationary contact 126 due to tight engagement therebetween, and thus provides a pressure seal to prevent leakage of insulating gas between the bus-bar tank 110 and the circuit-breaker tank 112.

With the present arrangement of the switching device 100, in accordance with the first embodiment, it may be construed that the stationary contact 126 is at least partially accommodated inside the bushing 122 therein. With the stationary contact 126 being accommodated, to most part, inside the bushing 122, and with the bushing 122 being made of material with high dielectric strength, there is a reduced risk of dielectric failure of the switching device 100 through the stationary contact 126. Further, with the collar 148 of the stationary contact 126 acting as a metallic shield and being dielectrically shielded inside the bushing 122, the collar 148 further helps to uniformly distribute electric field around the stationary contact 126 and thus further reduce any risk of dielectric failure therefrom. Furthermore, with the fixing arrangement 128 being, generally, entirely dielectrically shielded inside the bushing 126, there is, as such, no risk of dielectric failure therefrom, which is otherwise a significant drawback in traditional designs of switchgears known in the prior-art.

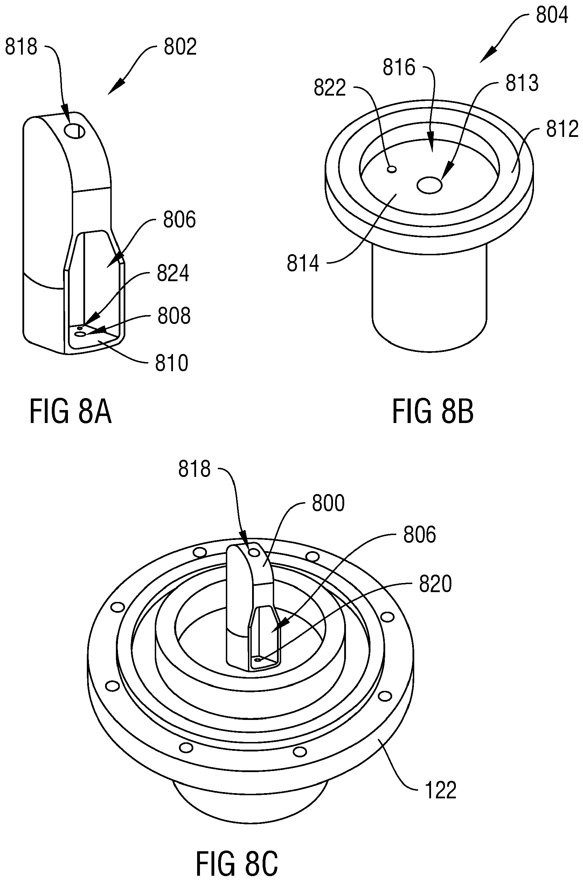

Referring to FIGS 8A-8C, in combination, illustrated is an arrangement for a stationary contact 800, and assembly showing the stationary contact 800 arranged with the bushing 122, in accordance with a second embodiment of the present disclosure. Herein, the stationary contact 800 includes a first member 802 and a second member 804, which may be assembled/coupled together. Such arrangement allows for even compact bushing assembly (as shown in FIG 8C) with no need of O-ring (such as, the O-ring 156) for mounting the stationary contact 800 to the bushing 122.

FIG 8A is diagrammatic perspective view representation of the first member 802 of the stationary contact 800, in accordance with the second embodiment of the present disclosure. As shown, the first member 802 is generally an elongated member. The first member 802 forms upper part of the stationary contact 800, and has the first end 126a (as described above) of the stationary contact 800. The first member 802 has a pocket 806 formed therein. The pocket 806 allows for accessing a connecting hole 808 in a bottom side 810 of the first member 802. The first member 802 also has a locating hole 824 formed in the bottom side 810 thereof. The first member 802 further has a through-hole 818 extending therefrom up to the pocket 806 to allow for passing a tool, such as a screw-driver or the like.

FIG 8B is diagrammatic perspective view representation of the second member 804 of the stationary contact 800, in accordance with the second embodiment of the present disclosure. As shown the second member 804 has a hollow cylindrical shape. The second member 804 has a rim 812 extending outwardly from a top side 814 thereof forming a cavity 816 therein. The cavity 816 is formed to have a same area as the bottom side 810 of the first member 802. Herein, the rim 812 is arranged in a slot 146 formed in the bushing 122, when the second member 804 is arranged inside the bushing 122. In one or more embodiments, the second member 804 is formed with the bushing 122. For instance, the second member 804 is molded with the bushing 122. The second member 804 also has a connecting hole 813 formed in the top side 814 thereof. The second member 802 further includes a locater pin 822 provided at the top side 814 thereof. Herein, the locater pin 822 is in the form of a dowel pin or the like. In some examples, the locater pin 822 may be spring-loaded without any limitations.

FIG 8C is a diagrammatic perspective view representation of the bushing 122 supporting the stationary contact 800 therein, in accordance with a second embodiment of the present disclosure. Referring to FIGS 8A-8C in combination, as may be understood, herein, the bottom side 810 of the first member 802 is accommodated in the cavity 816 in the second member 804, with the connecting hole 808 in the bottom side 810 of the first member 802 aligned with the connecting hole 813 in the top side 814 of the second member 804, when the first member 802 and the second member 804 are coupled in the stationary contact 800. Further, the locater pin 822 is inserted into the locating hole 824 to align the first member 802 and the second member 804, when coupling the first member 802 and the second member 804 in the stationary contact 800. The fixing arrangement 128 provides a fastener 820, such as a screw, which may be bolted by the tool, such as the screwdriver, passing through the through-hole 818 extending therefrom up to the pocket 806, for coupling the first member 802 and the second member 804 in the stationary contact 800.

With the present arrangement of the switching device 100, in accordance with the second embodiment, the assembly of the bushing 122 along with the stationary contact 800 provides more dielectric clearance. This is achieved, for example with the fastener 820 of the fixing arrangement 128 being located inside the pocket 806. The shape of the bushing 122 along with the stationary contact 800 also helps in reducing the stress generated during the dielectric testing. The present arrangement, as per the second embodiment, has reduced number of parts, and lesser number of fasteners required. For instance, the need of O-ring and the separate insert is eliminated. Further, the components, including the first member 802 and the second member 804, has reduced material requirement, for example due to formation of pocket 806, which leads to further cost savings.

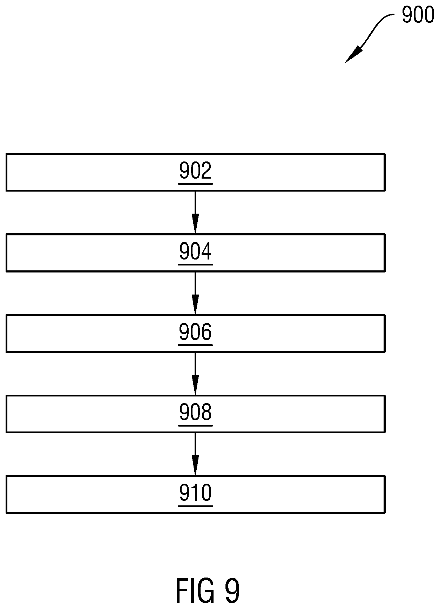

The present disclosure further provides a method of assembling a switching device (such as, the switching device 100 as described above). FIG 9 is a flowchart listing steps involved in a method 900 of assembling the switching device 100 for opening and closing a circuit between the first electric terminal 118 and the second electric terminal 120, in accordance with an embodiment of the present disclosure. At step 902, the method 900 comprises providing the bus-bar tank 110 having the first electric terminal 118 disposed therein. At step 904, the method 900 also comprises providing the circuit-breaker tank 112 having the second electric terminal 120 disposed therein. At step 906, the method 900 further comprises arranging the bushing 122 between the bus-bar tank 110 and the circuit-breaker tank 112 to couple the bus-bar tank 110 and the circuit-breaker tank 112. At step 908, the method 900 further comprises mounting the stationary contact 126, 800 to the bushing 122 by the fixing arrangement 128, with the stationary contact 126, 800 being at least partially accommodated inside the bushing 122 and the fixing arrangement 128 being dielectrically shielded inside the bushing 122, the stationary contact 126, 800 having the first end 126a and the second end 126b, with the first end 126a disposed in the bus-bar tank 110 and having the pivot connection with the blade contact 111 therein to be disposed in electrical connection with the first electric terminal 118 in the bus-bar tank 110. At step 910, the method 900 further comprises arranging the circuit-breaker arrangement 130 inside the circuit-breaker tank 112, with the circuit-breaker arrangement 130 disposed in electrical connection with the second electric terminal 120 in the circuit-breaker tank 112 and adapted to be disposed in contact with the second end 126b of the stationary contact 126, 800.

In one or more embodiments, the method 900 further comprises providing the bushing 122 with the flange 140 extending into the circuit-breaker tank 112, with the second end 126b of the stationary contact 126, 800 being surrounded by the flange 140 of the bushing 122. With the bushing 122, generally, having a higher dielectric strength, it helps to prevent flashovers from the second end 126b of the stationary contact 126, 800.

In one or more embodiments, the method 900 further comprises forming the bushing 122 to have the substantially hollow cylindrical shape. The cylindrical shape of the bushing 122 allows to at least partially accommodate the stationary contact 126, 800 and the fixing arrangement 128 therein, and thus reduces the risk of dielectric failure therefrom.

In the first embodiment, the method 900 further comprises arranging the insert 152, as part of the fixing arrangement 128, with the plurality of tapped holes 154 formed therein, in the slot 146 formed in the bushing 122; providing the stationary contact 126 with the collar 148 with holes 150 formed therein; arranging an O-ring, as part of the fixing arrangement, between the insert and the collar of the stationary contact; and coupling the stationary contact 126 to the insert 152 by fasteners 158, as part of the fixing arrangement 128, passing through the holes 150 in the collar 148 of the stationary contact 126 and the tapped holes 154 in the insert 152, thereby mounting the stationary contact 126 to the bushing 122. Herein, the insert 152 supports the stationary contact 126 inside the bushing 122. The collar 148 of the stationary contact 126 acts as a metallic shield and helps to uniformly distribute electric field around the stationary contact 126. And, with the fasteners 158 being generally located inside the bushing 122 and/or surrounded by the bushing 122, the risk of dielectric failure is significantly reduced. The O-ring 156 is pressed between the insert 152 and the collar 148 of the stationary contact 126 and thus provides the pressure seal to prevent leakage of insulating gas between the bus-bar tank 110 and the circuit-breaker tank 112.

In the second embodiment, the method 900 further comprises forming the stationary contact 800 as a first member 802 and a second member 804, with the first member 802 having a pocket 806 formed therein to allow for accessing a connecting hole 808 in a bottom side 810 thereof, and the second member 804 having a hollow cylindrical shape with a rim 812 extending outwardly from a top side 814 thereof forming a cavity 816 therein, with the rim 812 arranged in a slot 146 formed in the bushing 122, and a connecting hole 813 formed in the top side 814 thereof; accommodating the bottom side 810 of the first member 802 in the cavity 816 in the second member 804, with the connecting hole 808 in the bottom side 810 of the first member 802 aligned with the connecting hole 813 in the top side 814 of the second member 804, when the first member 802 and the second member 804 are coupled in the stationary contact 800; aligning the first member 802 and the second member 804 using a locater pin 822 provided at the top side 814 of the second member 804 and a locating hole 824 formed in the bottom side 810 of the first member 802, such that the locater pin 822 is inserted into the locating hole 824; and passing a tool from the first end 126a of the first member 802 of the stationary contact 126 through a through-hole 818 extending therefrom up to the pocket 806, for fastening a fastener 820 of the fixing arrangement 128, for coupling the first member 802 and the second member 804 in the stationary contact 800.

The present design of the switching device 100 provide more dielectric clearance, which is especially useful in case of newer switching devices using clean air insulating gases, such as combination of mixture of carbon dioxide gas and nitrogen gas, or in general any SF6-free gas. It may be appreciated that the operating mechanism is similar to SF6 version, but due to changes in the insulating gas, the dielectric strength reduces and the gap between the blade contact and the EARTH contact, and the blade contact and the ON contact may not be sufficient, hence the bushing 122 is modified to increase its height and with shape to provide better dielectric shielding. Herein, the overall dielectric clearances for the switching device 100 is met in spite of using SF6 free gas, while keeping the same footprint of the existing SF6 design. This is generally achieved by moving the fixing location of the stationary contact 126 from the top of the bushing 122 to bottom, with integrating the fixing arrangement therein. The present switching device 100 achieves dielectric test values similar to SF6 products for 36kv rating. Further, the overall dimensions remain generally same thus allowing for easy assembly in existing enclosures (such as enclosure 108) and/or housings (such as housing 102) of the switching devices. The present switching device 100 further eliminate the requirement of clamping/tightening plates (as used in traditional designs), thus simplifying assembly thereof, and also reducing possible point of dielectric failure.

While the present disclosure has been described in detail with reference to certain embodiments, it should be appreciated that the present disclosure is not limited to those embodiments. In view of the present disclosure, many modifications and variations would be present themselves, to those skilled in the art without departing from the scope of the present invention, which is defined by the appended claims.

**Reference Numerals**

| | |
|---|---|
| switching device | 100 |
| housing | 102 |
| pole assembly | 104 |
| control panel | 106 |
| enclosure | 108 |
| bus-bar tank | 110 |
| connecting end of bus-bar tank | 110a |
| blade contact | 111 |
| circuit-breaker tank | 112 |
| connecting end of circuit-breaker tank | 112a |
| ON contact | 113 |
| transformer tank | 114 |
| EARTH contact | 115 |
| cable bushing tank | 116 |
| first electric terminal | 118 |
| second electric terminal | 120 |
| bushing | 122 |
| fasteners | 124 |
| stationary contact | 126 |
| first end of stationary contact | 126a |
| second end of stationary contact | 126b |
| fixing arrangement | 128 |
| circuit-breaker arrangement | 130 |
| movable contact | 132 |
| rigid conductive member | 134 |
| actuating arrangement | 136 |
| holes | 138 |
| flange | 140 |
| flange | 142 |
| laterally projected rim | 144 |
| slot | 146 |
| collar | 148 |
| holes in collar | 150 |
| insert | 152 |
| tapped holes | 154 |
| O-ring | 156 |
| fasteners | 158 |
| stationary contact | 800 |
| first member | 802 |
| second member | 804 |
| pocket | 806 |
| connecting hole | 808 |
| bottom side | 810 |
| rim | 812 |
| connecting hole | 813 |
| top side | 814 |
| cavity | 816 |
| through-hole | 818 |
| fastener | 820 |
| locater pin | 822 |
| locating hole | 824 |
| flowchart | 900 |
| step | 902 |
| step | 904 |
| step | 906 |
| step | 908 |
| step | 910 |

## Claims

1. A switching device (100) for opening and closing a circuit between a first electric terminal (118) and a second electric terminal (120), the switching device (100) comprising:
a bus-bar tank (110) having the first electric terminal (118) disposed therein;
a circuit-breaker tank (112) having the second electric terminal (120) disposed therein;
a bushing (122) arranged between and coupling the bus-bar tank (110) and the circuit-breaker tank (112);
a stationary contact (126, 800) mounted to the bushing (122) by a fixing arrangement (128), the stationary contact (126, 800) having a first end (126a) and a second end (126b), with the first end (126a) disposed in the bus-bar tank (110) and having a pivot connection with a blade contact (111) therein to be disposed in electrical connection with the first electric terminal (118) in the bus-bar tank (110); and
a circuit-breaker arrangement (130) arranged inside the circuit-breaker tank (112) and disposed in electrical connection with the second electric terminal (120) therein, the circuit-breaker arrangement (130) adapted to be disposed in contact with the second end (126b) of the stationary contact (126, 800),
wherein:
the stationary contact (126, 800) is at least partially accommodated inside the bushing (122), and
the fixing arrangement (128) is dielectrically shielded inside the bushing (122).

2. The switching device (100) as claimed in claim 1, wherein the bushing (122) has a flange (140) extending into the circuit-breaker tank (112), and wherein the second end (126b) of the stationary contact (126, 800) is surrounded by the flange (140) of the bushing (122).

3. The switching device (100) as claimed in claim 1, wherein the fixing arrangement (128) comprises an insert (152) with a plurality of tapped holes (154) formed therein, wherein the insert (152) is arranged in a slot (146) formed in the bushing (122).

4. The switching device (100) as claimed in claim 3, wherein the stationary contact (126) has a collar (148) with holes (150) formed therein.

5. The switching device (100) as claimed in claim 4, wherein the fixing arrangement (128) further comprises fasteners (158) passing through the holes (150) in the collar (148) of the stationary contact (126) and the tapped holes (154) in the insert (152) to couple the stationary contact (126) to the insert (152), thereby mounting the stationary contact (126) to the bushing (122).

6. The switching device (100) as claimed in claim 4, wherein the fixing arrangement (128) further comprises an O-ring (156) arranged between the insert (152) and the collar (130) of the stationary contact (126).

7. The switching device (100) as claimed in claim 1, wherein the stationary contact (800) comprises:
a first member (802) having a pocket (806) formed therein to allow for accessing a connecting hole (808) in a bottom side (810) thereof; and
a second member (804) having a hollow cylindrical shape with a rim (812) extending outwardly from a top side (814) thereof forming a cavity (816) therein, with the rim (812) arranged in a slot (146) formed in the bushing (122), and a connecting hole (813) formed in the top side (814) thereof,
wherein the bottom side (810) of the first member (802) is accommodated in the cavity (816) in the second member (804), with the connecting hole (808) in the bottom side (810) of the first member (802) aligned with the connecting hole (813) in the top side (814) of the second member (804), when the first member (802) and the second member (804) are coupled in the stationary contact (800).

8. The switching device (100) as claimed in claim 7, wherein the second member (804) includes a locater pin (822) provided at the top side (814) thereof, and wherein the first member (802) has a locating hole (824) formed in the bottom side (810) thereof, such that the locater pin (822) is inserted into the locating hole (824) to align the first member (802) and the second member (804), when coupling the first member (802) and the second member (804) in the stationary contact (800).

9. The switching device (100) as claimed in claim 7, wherein the first member (802) has the first end (126a) of the stationary contact (126) with a through-hole (818) extending therefrom up to the pocket (806) to allow for passing a tool for fastening a fastener (820) of the fixing arrangement (128), for coupling the first member (802) and the second member (804) in the stationary contact (800).

10. The switching device (100) as claimed in claim 1, wherein the bushing (122) has a substantially hollow cylindrical shape.

11. The switching device (100) as claimed in claim 1, wherein the bushing (122) is made of epoxy material.

12. The switching device (100) as claimed in claim 1, wherein the first end (126a) of the stationary contact (126, 800) has a rounded shape.

13. A method (900) of assembling the switching device (100) as claimed in claim 1, the method comprising:
providing a bus-bar tank (110) having the first electric terminal (118) disposed therein;
providing a circuit-breaker tank (112) having the second electric terminal (120) disposed therein;
arranging a bushing (122) between the bus-bar tank (110) and the circuit-breaker tank (112) to couple the bus-bar tank (110) and the circuit-breaker tank (112);
mounting a stationary contact (126, 800) to the bushing (122) by a fixing arrangement (128), with the stationary contact (126, 800) being at least partially accommodated inside the bushing (122) and the fixing arrangement (128) being dielectrically shielded inside the bushing (122), the stationary contact (126, 800) having a first end (126a) and a second end (126b), with the first end (126a) disposed in the bus-bar tank (110) and having a pivot connection with a blade contact (111) therein to be disposed in electrical connection with the first electric terminal (118) in the bus-bar tank (110); and
arranging a circuit-breaker arrangement (130) inside the circuit-breaker tank (112), with the circuit-breaker arrangement (130) disposed in electrical connection with the second electric terminal (120) in the circuit-breaker tank (112) and adapted to be disposed in contact with the second end (126b) of the stationary contact (126, 800).

14. The method (900) as claimed in claim 13 further comprising:
arranging an insert (152), as part of the fixing arrangement (128), with a plurality of tapped holes (154) formed therein, in a slot (146) formed in the bushing (122);
providing the stationary contact (126) with a collar (148) with holes (150) formed therein;
arranging an O-ring (156), as part of the fixing arrangement (128), between the insert (152) and the collar (130) of the stationary contact (126); and
coupling the stationary contact (126) to the insert (152) by fasteners (158), as part of the fixing arrangement (128), passing through the holes (150) in the collar (148) of the stationary contact (126) and the tapped holes (154) in the insert (152), thereby mounting the stationary contact (126) to the bushing (122).

15. The method (900) as claimed in claim 13 further comprising:
forming the stationary contact (800) as a first member (802) and a second member (804), with the first member (802) having a pocket (806) formed therein to allow for accessing a connecting hole (808) in a bottom side (810) thereof, and the second member (804) having a hollow cylindrical shape with a rim (812) extending outwardly from a top side (814) thereof forming a cavity (816) therein, with the rim (812) arranged in a slot (146) formed in the bushing (122), and a connecting hole (813) formed in the top side (814) thereof;
accommodating the bottom side (810) of the first member (802) in the cavity (816) in the second member (804), with the connecting hole (808) in the bottom side (810) of the first member (802) aligned with the connecting hole (813) in the top side (814) of the second member (804), when the first member (802) and the second member (804) are coupled in the stationary contact (800);
aligning the first member (802) and the second member (804) using a locater pin (822) provided at the top side (814) of the second member (804) and a locating hole (824) formed in the bottom side (810) of the first member (802), such that the locater pin (822) is inserted into the locating hole (824); and
passing a tool from the first end (126a) of the first member (802) of the stationary contact (126) through a through-hole (818) extending therefrom up to the pocket (806), for fastening a fastener (820) of the fixing arrangement (128), for coupling the first member (802) and the second member (804) in the stationary contact (800).

## Patentansprüche

1. Schaltvorrichtung (100) zum Öffnen und Schließen eines Schaltkreises zwischen einem ersten elektrischen Anschluss (118) und einem zweiten elektrischen Anschluss (120), wobei die Schaltvorrichtung (100) Folgendes umfasst:
einen Sammelschienenbehälter (110), in dem der erste elektrische Anschluss (118) platziert ist;
einen Leistungsschalterbehälter (112), in dem der zweite elektrische Anschluss (120) platziert ist;
eine Durchführung (122), die zwischen dem Sammelschienenbehälter (110) und dem Leistungsschalterbehälter (112) angeordnet ist und diese koppelt;
einen feststehenden Kontakt (126, 800), der durch eine Fixierungsanordnung (128) an der Durchführung (122) montiert ist, wobei der feststehende Kontakt (126, 800) ein erstes Ende (126a) und ein zweites Ende (126b) aufweist, wobei das erste Ende (126a) in dem Sammelschienenbehälter (110) platziert ist und eine Schwenkverbindung mit einem Messerkontakt (111) darin aufweist, um in elektrische Verbindung mit dem ersten elektrischen Anschluss (118) in dem Sammelschienenbehälter (110) platziert zu werden; und
eine Leistungsschalteranordnung (130), die in dem Leistungsschalterbehälter (112) angeordnet und in elektrischer Verbindung mit dem zweiten elektrischen Anschluss (120) darin platziert ist, wobei die Leistungsschalteranordnung (130) dazu ausgelegt ist, in Kontakt mit dem zweiten Ende (126b) des feststehenden Kontakts (126, 800) platziert zu werden,
wobei:
der feststehende Kontakt (126, 800) zumindest teilweise in der Durchführung (122) aufgenommen ist, und
die Fixierungsanordnung (128) in der Durchführung (122) dielektrisch abgeschirmt ist.

2. Schaltvorrichtung (100) nach Anspruch 1, wobei die Durchführung (122) einen Flansch (140) aufweist, der sich in den Leistungsschalterbehälter (112) erstreckt, und wobei das zweite Ende (126b) des feststehenden Kontakts (126, 800) von dem Flansch (140) der Durchführung (122) umgeben ist.

3. Schaltvorrichtung (100) nach Anspruch 1, wobei die Fixierungsanordnung (128) einen Einsatz (152) mit einer Mehrzahl von darin ausgebildeten Gewindelöchern (154) umfasst, wobei der Einsatz (152) in einem in der Durchführung (122) ausgebildeten Schlitz (146) angeordnet ist.

4. Schaltvorrichtung (100) nach Anspruch 3, wobei der feststehende Kontakt (126) eine Manschette (148) mit darin ausgebildeten Löchern (150) aufweist.

5. Schaltvorrichtung (100) nach Anspruch 4, wobei die Fixierungsanordnung (128) ferner Befestigungselemente (158) umfasst, die durch die Löcher (150) in der Manschette (148) des feststehenden Kontakts (126) und die Gewindelöcher (154) in dem Einsatz (152) geführt sind, um den feststehenden Kontakt (126) mit dem Einsatz (152) zu koppeln, wodurch der feststehende Kontakt (126) an der Durchführung (122) montiert wird.

6. Schaltvorrichtung (100) nach Anspruch 4, wobei die Fixierungsanordnung (128) ferner einen O-Ring (156) umfasst, der zwischen dem Einsatz (152) und der Manschette (130) des feststehenden Kontakts (126) angeordnet ist.

7. Schaltvorrichtung (100) nach Anspruch 1, wobei der feststehende Kontakt (800) Folgendes umfasst:
ein erstes Element (802), in dem eine Tasche (806) ausgebildet ist, um einen Zugriff auf ein Verbindungsloch (808) in einer Unterseite (810) davon zu ermöglichen; und
ein zweites Element (804), das eine hohle zylindrische Form mit einem Rand (812), der sich von einer Oberseite (814) davon nach außen erstreckt, so dass ein Hohlraum (816) darin ausgebildet ist, wobei der Rand (812) in einem in der Durchführung (122) ausgebildeten Schlitz (146) angeordnet ist, und ein Verbindungsloch (813), das in der Oberseite (814) davon ausgebildet ist, aufweist,
wobei die Unterseite (810) des ersten Elements (802) in dem Hohlraum (816) in dem zweiten Element (804) aufgenommen ist, wobei das Verbindungsloch (808) in der Unterseite (810) des ersten Elements (802) mit dem Verbindungsloch (813) in der Oberseite (814) des zweiten Elements (804) ausgerichtet ist, wenn das erste Element (802) und das zweite Element (804) in dem feststehenden Kontakt (800) gekoppelt sind.

8. Schaltvorrichtung (100) nach Anspruch 7, wobei das zweite Element (804) einen Positionierungsstift (822) umfasst, der an der Oberseite (814) davon bereitgestellt ist, und wobei das erste Element (802) ein in der Unterseite (810) davon ausgebildetes Positionierungsloch (824) aufweist, so dass der Positionierungsstift (822) in das Positionierungsloch (824) eingesetzt ist, um das erste Element (802) und das zweite Element (804) auszurichten, wenn das erste Element (802) und das zweite Element (804) in dem feststehenden Kontakt (800) gekoppelt sind.

9. Schaltvorrichtung (100) nach Anspruch 7, wobei das erste Element (802) das erste Ende (126a) des feststehenden Kontakts (126) mit einem Durchgangsloch (818) aufweist, das sich davon nach oben zu der Tasche (806) erstreckt, um ein Durchführen eines Werkzeugs zum Befestigen eines Befestigungselements (820) der Fixierungsanordnung (128) zum Koppeln des ersten Elements (802) und des zweiten Elements (804) in dem feststehenden Kontakt (800) zu ermöglichen.

10. Schaltvorrichtung (100) nach Anspruch 1, wobei die Durchführung (122) eine im Wesentlichen hohle zylindrische Form aufweist.

11. Schaltvorrichtung (100) nach Anspruch 1, wobei die Durchführung (122) aus einem Epoxidmaterial besteht.

12. Schaltvorrichtung (100) nach Anspruch 1, wobei das erste Ende (126a) des feststehenden Kontakts (126, 800) eine gerundete Form aufweist.

13. Verfahren (900) zum Zusammenbauen der Schaltvorrichtung (100) nach Anspruch 1, wobei das Verfahren Folgendes umfasst:
Bereitstellen eines Sammelschienenbehälters (110), in dem der erste elektrische Anschluss (118) platziert ist;
Bereitstellen eines Leistungsschalterbehälters (112), in dem der zweite elektrische Anschluss (120) platziert ist;
Anordnen einer Durchführung (122) zwischen dem Sammelschienenbehälter (110) und dem Leistungsschalterbehälter (112) zum Koppeln des Sammelschienenbehälters (110) und des Leistungsschalterbehälters (112);
Montieren eines feststehenden Kontakts (126, 800) an der Durchführung (122) durch eine Fixierungsanordnung (128), wobei der feststehende Kontakt (126, 800) zumindest teilweise in der Durchführung (122) aufgenommen wird und die Fixierungsanordnung (128) in der Durchführung (122) dielektrisch abgeschirmt wird, wobei der feststehende Kontakt (126, 800) ein erstes Ende (126a) und ein zweites Ende (126b) aufweist, wobei das erste Ende (126a) in dem Sammelschienenbehälter (110) platziert ist und eine Schwenkverbindung mit einem Messerkontakt (111) darin aufweist, um in elektrische Verbindung mit dem ersten elektrischen Anschluss (118) in dem Sammelschienenbehälter (110) platziert zu werden; und
Anordnen einer Leistungsschalteranordnung (130) in dem Leistungsschalterbehälter (112), wobei die Leistungsschalteranordnung (130) in elektrische Verbindung mit dem zweiten elektrischen Anschluss (120) in dem Leistungsschalterbehälter (112) platziert wird und dazu ausgelegt ist, in Kontakt mit dem zweiten Ende (126b) des feststehenden Kontakts (126, 800) platziert zu werden.

14. Verfahren (900) nach Anspruch 13, ferner umfassend:
Anordnen eines Einsatzes (152) als Teil der Fixierungsanordnung (128) mit einer Mehrzahl von darin ausgebildeten Gewindelöchern (154) in einem in der Durchführung (122) ausgebildeten Schlitz (146);
Bereitstellen des feststehenden Kontakts (126) mit einer Manschette (148) mit darin ausgebildeten Löchern (150);
Anordnen eines O-Rings (156) als Teil der Fixierungsanordnung (128) zwischen dem Einsatz (152) und der Manschette (130) des feststehenden Kontakts (126); und
Koppeln des feststehenden Kontakts (126) mit dem Einsatz (152) durch Befestigungselemente (158) als Teil der Fixierungsanordnung (128), die durch die Löcher (150) in der Manschette (148) des feststehenden Kontakts (126) und die Gewindelöcher (154) in dem Einsatz (152) geführt werden, wodurch der feststehende Kontakt (126) an der Durchführung (122) montiert wird.

15. Verfahren (900) nach Anspruch 13, ferner umfassend:
Ausbilden des feststehenden Kontakts (800) als ein erstes Element (802) und ein zweites Element (804), wobei das erste Element (802) eine darin ausgebildete Tasche (806) aufweist, um einen Zugriff auf ein Verbindungsloch (808) in einer Unterseite (810) davon zu ermöglichen, und wobei das zweite Element (804) eine hohle zylindrische Form mit einem Rand (812), der sich von einer Oberseite (814) davon nach außen erstreckt, so dass ein Hohlraum (816) darin ausgebildet ist, wobei der Rand (812) in einem in der Durchführung (122) ausgebildeten Schlitz (146) angeordnet wird, und ein Verbindungsloch (813), das in der Oberseite (814) davon ausgebildet ist, aufweist;
Aufnehmen der Unterseite (810) des ersten Elements (802) in dem Hohlraum (816) in dem zweiten Element (804), wobei das Verbindungsloch (808) in der Unterseite (810) des ersten Elements (802) mit dem Verbindungsloch (813) in der Oberseite (814) des zweiten Elements (804) ausgerichtet wird, wenn das erste Element (802) und das zweite Element (804) in dem feststehenden Kontakt (800) gekoppelt werden;
Ausrichten des ersten Elements (802) und des zweiten Elements (804) unter Verwendung eines Positionierungsstifts (822), der an der Oberseite (814) des zweiten Elements (804) bereitgestellt ist, und eines Positionierungslochs (824), das in der Unterseite (810) des ersten Elements (802) ausgebildet ist, so dass der Positionierungsstift (822) in das Positionierungsloch (824) eingesetzt wird; und
Durchführen eines Werkzeugs von dem ersten Ende (126a) des ersten Elements (802) des feststehenden Kontakts (126) durch ein Durchgangsloch (818), das sich davon nach oben zu der Tasche (806) erstreckt, zum Befestigen eines Befestigungselements (820) der Fixierungsanordnung (128) zum Koppeln des ersten Elements (802) und des zweiten Elements (804) in dem feststehenden Kontakt (800) .

## Revendications

1. Dispositif de commutation (100) pour ouvrir et fermer un circuit entre une première borne électrique (118) et une seconde borne électrique (120), le dispositif de commutation (100) comprenant :
un réservoir de barre omnibus (110) ayant la première borne électrique (118) disposée dans celui-ci ;
un réservoir de disjoncteur (112) ayant la seconde borne électrique (120) disposée dans celui-ci ;
une traversée (122) agencée entre et couplant le réservoir de barre omnibus (110) et le réservoir de disjoncteur (112) ;
un contact stationnaire (126, 800) monté sur la traversée (122) par le biais d'un agencement de fixation (128), le contact stationnaire (126, 800) ayant une première extrémité (126a) et une seconde extrémité (126b), la première extrémité (126a) étant disposée dans le réservoir de barre omnibus (110) et ayant une connexion pivotante avec un contact à lame (111) dans ce dernier destiné à être disposé en connexion électrique avec la première borne électrique (118) dans le réservoir de barre omnibus (110) ; et
un agencement de disjoncteur (130) agencé à l'intérieur du réservoir de disjoncteur (112) et disposé en connexion électrique avec la seconde borne électrique (120) dans ce dernier, l'agencement de disjoncteur (130) étant adapté pour être disposé en contact avec la seconde extrémité (126b) du contact stationnaire (126, 800),
dans lequel :
le contact stationnaire (126, 800) est au moins partiellement logé à l'intérieur de la traversée (122), et
l'agencement de fixation (128) est diélectriquement protégé à l'intérieur de la traversée (122).

2. Dispositif de commutation (100) selon la revendication 1, dans lequel la traversée (122) a une bride (140) s'étendant dans le réservoir de disjoncteur (112), et dans lequel la seconde extrémité (126b) du contact stationnaire (126, 800) est entourée par la bride (140) de la traversée (122).

3. Dispositif de commutation (100) selon la revendication 1, dans lequel l'agencement de fixation (128) comprend une pièce d'insertion (152) avec une pluralité de trous taraudés (154) formés dans celle-ci, dans lequel la pièce d'insertion (152) est agencée dans une fente (146) formée dans la traversée (122).

4. Dispositif de commutation (100) selon la revendication 3, dans lequel le contact stationnaire (126) a un collier (148) avec des trous (150) formés dans celui-ci.

5. Dispositif de commutation (100) selon la revendication 4, dans lequel l'agencement de fixation (128) comprend en outre des pièces de fixation (158) passant à travers les trous (150) dans le collier (148) du contact stationnaire (126) et les trous taraudés (154) dans la pièce d'insertion (152) pour coupler le contact stationnaire (126) à la pièce d'insertion (152), ainsi montant le contact stationnaire (126) sur la traversée (122).

6. Dispositif de commutation (100) selon la revendication 4, dans lequel l'agencement de fixation (128) comprend en outre un joint torique (156) agencé entre la pièce d'insertion (152) et le collier (130) du contact stationnaire (126).

7. Dispositif de commutation (100) selon la revendication 1, dans lequel le contact stationnaire (800) comprend :
un premier élément (802) ayant une poche (806) formée dans celui-ci pour permettre d'accéder à un trou de connexion (808) dans un côté inférieur (810) de celui-ci ; et
un second élément (804) ayant une forme cylindrique creuse avec un pourtour (812) s'étendant vers l'extérieur depuis un côté supérieur (814) de celui-ci formant une cavité (816) dans celui-ci, le pourtour (812) étant agencé dans une fente (146) formée dans la traversée (122), et un trou de connexion (813) étant formé dans le côté supérieur (814) de celui-ci,
dans lequel le côté inférieur (810) du premier élément (802) est logé dans la cavité (816) dans le second élément (804), le trou de connexion (808) dans le côté inférieur (810) du premier élément (802) étant aligné avec le trou de connexion (813) dans le côté supérieur (814) du second élément (804), lorsque le premier élément (802) et le second élément (804) sont couplés dans le contact stationnaire (800).

8. Dispositif de commutation (100) selon la revendication 7, dans lequel le second élément (804) inclut une goupille de positionnement (822) prévue sur le côté supérieur (814) de celui-ci, et dans lequel le premier élément (802) a un trou de positionnement (824) formé dans le côté inférieur (810) de celui-ci, de telle sorte que la goupille de positionnement (822) soit insérée dans le trou de positionnement (824) pour aligner le premier élément (802) et le second élément (804), lors du couplage du premier élément (802) et du second élément (804) dans le contact stationnaire (800).

9. Dispositif de commutation (100) selon la revendication 7, dans lequel le premier élément (802) a la première extrémité (126a) du contact stationnaire (126), un trou débouchant (818) s'étendant depuis celui-ci jusqu'à la poche (806) pour permettre le passage d'un outil pour fixer une pièce de fixation (820) de l'agencement de fixation (128), pour coupler le premier élément (802) et le second élément (804) dans le contact stationnaire (800).

10. Dispositif de commutation (100) selon la revendication 1, dans lequel la traversée (122) a une forme cylindrique sensiblement creuse.

11. Dispositif de commutation (100) selon la revendication 1, dans lequel la traversée (122) est faite de matériau époxy.

12. Dispositif de commutation (100) selon la revendication 1, dans lequel la première extrémité (126a) du contact stationnaire (126, 800) a une forme arrondie.

13. Procédé (900) d'assemblage du dispositif de commutation (100) selon la revendication 1, le procédé comprenant :
la fourniture d'un réservoir de barre omnibus (110) ayant la première borne électrique (118) disposée dans celui-ci ;
la fourniture d'un réservoir de disjoncteur (112) ayant la seconde borne électrique (120) disposée dans celui-ci ;
l'agencement d'une traversée (122) entre le réservoir de barre omnibus (110) et le réservoir de disjoncteur (112) pour coupler le réservoir de barre omnibus (110) et le réservoir de disjoncteur (112) ;
le montage d'un contact stationnaire (126, 800) sur la traversée (122) par le biais d'un agencement de fixation (128), le contact stationnaire (126, 800) étant au moins partiellement logé à l'intérieur de la traversée (122) et l'agencement de fixation (128) étant diélectriquement protégé à l'intérieur de la traversée (122), le contact stationnaire (126, 800) ayant une première extrémité (126a) et une seconde extrémité (126b), la première extrémité (126a) étant disposée dans le réservoir de barre omnibus (110) et ayant une connexion pivotante avec un contact à lame (111) dans ce dernier destiné à être disposé en connexion électrique avec la première borne électrique (118) dans le réservoir de barre omnibus (110) ; et
l'agencement d'un agencement de disjoncteur (130) à l'intérieur du réservoir de disjoncteur (112), l'agencement de disjoncteur (130) étant disposé en connexion électrique avec la seconde borne électrique (120) dans le réservoir de disjoncteur (112) et adapté pour être disposé en contact avec la seconde extrémité (126b) du contact stationnaire (126, 800).

14. Procédé (900) selon la revendication 13, comprenant en outre :
l'agencement d'une pièce d'insertion (152), en tant que partie de l'agencement de fixation (128), avec une pluralité de trous taraudés (154) formés dans celle-ci, dans une fente (146) formée dans la traversée (122) ;
la fourniture du contact stationnaire (126) avec un collier (148) avec des trous (150) formés dans celui-ci ;
l'agencement d'un joint torique (156), en tant que partie de l'agencement de fixation (128), entre la pièce d'insertion (152) et le collier (130) du contact stationnaire (126) ; et
le couplage du contact stationnaire (126) à la pièce d'insertion (152) par le biais de pièces de fixation (158), en tant que partie de l'agencement de fixation (128), passant à travers les trous (150) dans le collier (148) du contact stationnaire (126) et les trous taraudés (154) dans la pièce d'insertion (152), ainsi montant le contact stationnaire (126) sur la traversée (122).

15. Procédé (900) selon la revendication 1, comprenant en outre :
la formation du contact stationnaire (800) sous la forme d'un premier élément (802) et d'un second élément (804), le premier élément (802) ayant une poche (806) formée dans celui-ci pour permettre d'accéder à un trou de connexion (808) dans un côté inférieur (810) de celui-ci, et le second élément (804) ayant une forme cylindrique creuse avec un pourtour (812) s'étendant vers l'extérieur depuis un côté supérieur (814) de celui-ci formant une cavité (816) dans celui-ci, le pourtour (812) étant agencé dans une fente (146) formée dans la traversée (122), et un trou de connexion (813) étant formé dans le côté supérieur (814) de celui-ci ;
le logement du côté inférieur (810) du premier élément (802) dans la cavité (816) dans le second élément (804), le trou de connexion (808) dans le côté inférieur (810) du premier élément (802) étant aligné avec le trou de connexion (813) dans le côté supérieur (814) du second élément (804), lorsque le premier élément (802) et le second élément (804) sont couplés dans le contact stationnaire (800) ;
l'alignement du premier élément (802) et du second élément (804) en utilisant une goupille de positionnement (822) prévue sur le côté supérieur (814) du second élément (804) et un trou de positionnement (824) formé dans le côté inférieur (810) du premier élément (802), de telle sorte que la goupille de positionnement (822) soit insérée dans le trou de positionnement (824) ; et
le passage d'un outil depuis la première extrémité (126a) du premier élément (802) du contact stationnaire (126) à travers un trou débouchant (818), s'étendant depuis celui-ci jusqu'à la poche (806), pour fixer une pièce de fixation (820) de l'agencement de fixation (128), pour coupler le premier élément (802) et le second élément (804) dans le contact stationnaire (800).
